# EUROPEAN PATENT SPECIFICATION

(11) **EP 2 795 959 B1**
(45) Date of publication and mention of the grant of the patent: **13.07.2016**
(21) Application number: 11802392.8
(22) Date of filing: 20.12.2011
(51) Int. Cl.: H04W 36/08, H04W 36/06, H04W 88/04

(54) **METHOD FOR CHANGING THE CONFIGURATION OF A RELAY NODE, CORRESPONDING RELAY NODE AND CORRESPONDING CELLULAR NETWORK SYSTEM**
VERFAHREN ZUR ÄNDERUNG DER KONFIGURATION EINES RELAISKNOTENS, ENTSPRECHENDER RELAISKNOTEN UND ENTSPRECHENDES ZELLULARES NETZSYSTEM
PROCÉDÉ DE CHANGEMENT DE CONFIGURATION D'UN NOEUD RELAIS, NOEUD RELAIS CORRESPONDANT ET SYSTÈME DE RÉSEAU CELLULAIRE CORRESPONDANT

(43) Date of publication of application: 29.10.2014
(73) Proprietor: Nokia Solutions and Networks Oy, 02610 Espoo (FI)
(72) Inventor: REDANA, Simone, 81541 Munich (DE); BULAKCI, Omer, 80637 Munich (DE); BOU SALEH, Abdallah, 80636 Munich (DE); RAAF, Bernhard, 82061 Neuried (DE)
(74) Representative: Borgström, Markus
(86) International application number: PCT/EP2011/073366
(87) International publication number: WO 2013/091678

(56) References cited:
- WO-A1-2011/110230
- US-A1- 2011 249 558

## Description

### FIELD OF THE INVENTION

The present invention relates to the field of communication networks and in particular to communication networks using relay nodes, wherein a relay node is scheduled for a handover.

### BACKGROUND OF THE INVENTION

In mobile wireless communication systems, such as the 3GPP Long Term Evolution (LTE, LTE-Advanced), systems may incorporate relaying techniques. Relaying based on dedicated nodes (relay node, RN) is one of the key solutions in fourth generation (4G) systems (e.g. LTE-A, WiMAX). The LTE Rel.10 standards define the so called two-hop architecture, i.e. with all relay nodes (RNs) connected directly to a donor eNodeB or base station (DeNB). More advanced concepts consider also multi-hop architectures, with RNs allowed to connect also to other RNs (nested-RN).

An RN may communicate with a base station or any other kind of access point via a so-called backhaul link and with a user equipment (UE) via a so-called access link. RNs are used to fulfill the increasing demand on coverage and capacity. Accordingly, a plurality of RNs can be deployed in the network to enhance the system performance. For the coverage extension, the RNs can be deployed regularly at the cell edge. As the capacity of the wireless backhaul link is a vital factor for the end-to-end performance of RN-served UEs (RN-UEs), it is a common practice that directional antennas pointing towards the DeNBs are assumed for the backhaul link, which can significantly enhance the performance. In addition, omni-directional antennas at RNs are assumed on the access link because the UEs can be anywhere around the RN.

On the other hand, wireless access networks have been growing at an astonishingly rapid pace with which the exploding energy consumption and the consequent monetary and environmental costs have captured high attention among network operators, vendors and researchers alike. One approach to reduce the power consumption of the network is to shut down under-utilized access nodes. Such an approach can yield significant energy savings not only in low-traffic conditions but also in busy hours with a marginal impact on the quality of service (QoS).

If an access node is about to be shut down which serves as a backhaul for an RN, this RN has to be handed over to another access node. This may lead to some of the following problems. After handover to the new access node or access point, the backhaul antenna at the RN may perform poorly, in particular when directional antennas are installed at the RN which are pointing towards the old, shut down access point. Further, UEs to be taken over by the RN are served badly by the RN access antenna, as the radio distance between the RN and a UE could be large which results in reduced received signal-to-noise ratio (SNR).

US 2011/249558 relates to cellular communications and in particular to a mechanism for deploying a relaying device within a communications system. Accordingly, an available network configuration and a required network configuration are determined and deploying at least one network apparatus in accordance of the required configuration.

In view of the above-described situation, there exists a need for an improved technique to configure an RN in a handover situation. Hence, a system or method being able to provide an efficient change of the configuration of the RN may be needed.

### SUMMARY OF THE INVENTION

This need may be met by the subject matter according to the independent claims. Advantageous embodiments of the herein disclosed subject matter are described by the dependent claims.

According to a first aspect of the herein disclosed subject matter, there is provided a method for changing the configuration of a relay node within a cellular network system. The cellular network system comprises a source access point and a target access point, wherein the relay node is connected to the source access point and comprises a first beam being assigned to a communication between the relay node and the source access point and a second beam being assigned to a communication between the relay node and a user equipment. The relay node is to be handed over from the source access point to the target access point. The method comprises changing, in response to a scheduled handover of the relay node from the source access point to the target access point, the configuration of the relay node by assigning the first beam to a communication between the user equipment and the relay node and by assigning the second beam to a communication between the relay node and the target access point.

The term "relay node" or RN according to this embodiment may be a base station or access point not having a fixed connection to the operator's core network (backhaul). The backhaul connection may be provided to them over radio interface from a standalone (i.e. having a fixed backhaul) base station (donor node, DeNB) or access point/node. The RN can be either a stationary device (e.g. installed on a lamppost), or a mobile device (e.g. installed in a bus, train). The basic use case for RNs is providing low cost network coverage extension and coverage improvement in areas not suitable for typical base station deployments (e.g. due to cost and/or difficulties of providing fixed backhaul).

The first and the second beam may be provided by one or more antennas, wherein the beams may be formed by using beam forming for providing a backhaul link to the source access point and an access link to the user equipment. In the following, the terms "beam" and "antenna" may be used for the same purpose and are exchangeable.

The term "access point" may refer a base station or any kind of base station or eNodeB being able to provide a backhaul link for the RN. The access point may also be a further RN providing the backhaul link via itself to a base station. The user equipment may be a regular LTE device being able to communicate with the RN.

As already explained above, RNs may be deployed at the cell edge to enhance the cell coverage. Besides, beams, for instance provided by directional antennas, may be installed at the RNs conventionally for the backhaul transmissions. The directional antennas may result in significantly reduced interference levels at the DeNB in UL (uplink) and at the RN in DL (downlink). In addition, beams, for instance provided by omni-directional antennas, may be installed at the RNs conventionally for the access link transmissions.

The RN may be scheduled to be handed over from the source access point to a target access point. The RN may receive a trigger signal comprising information about the scheduled handover or may decide itself by observing the source access point whether a handover may be required.

In common systems, after a handover of the RN from the source access point to the target access point, the backhaul antenna or beam at the RN may perform poorly. For instance, during the network planning phase directional antennas are installed at the RN, which are pointing towards the source access point. Thus, other access points may easily be in the backward attenuation side of this RN. As the backhaul link quality is decisive for throughput levels of RN-UEs, this issue should be mitigated.

Further, UEs, which are supposed to be taken over by the RN, for instance from the source access point, may be served badly by the RN access antenna. The radio distance between the RN and such UEs could be large which may result in reduced received SNR. This is particularly true for UEs that are close to the access point and consequently typically far away from the RN which is typically placed close to the cell edge of the access point.

Hence, the basic idea of the present invention is to provide a method being able to improve the link and transmission quality.

According to this method, the beam being used as backhaul antenna, i.e. for transmission between RN and access point, and the beam being used as access antenna, i.e. for transmission between RN and UEs, may be swapped. By this method, the RN may connect to another access point than normally and may better serve UEs that are normally served by its original access point. Both cases are compared to using the same beams for transmission to access points respectively UEs as before.

Swapping the beams may denote in this context that (i) the backhaul beam may be used for access communication or (ii) the access link may be used for backhaul communication or (iii) the backhaul beam may be used for access communication and the access link may be used for backhaul communication.

According to an embodiment of the invention, the method further comprises receiving, by the relay node, a trigger signal being indicative for the scheduled handover of the relay node from the source access point to the target access point, and changing, in response to the trigger signal, the configuration of the relay node.

In this embodiment, the handover and the change of the configuration of the relay node may be triggered from an external unit, not from the relay node itself.

According to a further embodiment of the invention, receiving a trigger signal comprises receiving the trigger signal from the source access point or an operation and maintenance system (O&M system).

The trigger signal may be provided by the O&M system as this system may have knowledge of the overall network system and may thus decide whether the RN has to be handed over or not and may, in one embodiment, decide whether to swap the antennas or not, i.e., whether to change the antenna configuration of the RN or not.

The trigger signal may also be provided by the source access point as the source access point may have knowledge of the load or under-load of itself and may thus decide whether the RN has to be handed over or not and may, in one embodiment, decide whether to swap the antennas or not, i.e., whether to change the antenna configuration of the RN or not.

According to a further embodiment of the invention, changing the configuration of the relay node may further comprise assigning the first beam to a communication between the user equipment and the relay node and by assigning the first beam to a communication between the relay node and the target access point.

According to this embodiment, the antenna or beam being used for the backhaul link before the handover may be used for backhaul link and access link after the handover and change of the configuration. This may provide the advantage that only one antenna is necessary.

According to a further embodiment of the invention, changing the configuration of the relay node may further comprise assigning the second beam to a communication between the user equipment and the relay node and by assigning the second beam to a communication between the relay node and the target access point.

According to this embodiment, the antenna or beam being used for the access link before the handover may be used for backhaul link and access link after the handover and change of the configuration. This may provide the advantage that only one antenna is necessary.

According to a further embodiment of the invention, the trigger signal is indicative for a shutdown of at least a part of the source access point, e.g. a sector of the access point which may be the sector serving the RN.

Some of the access nodes/points, being DeNBs and/or RNs, may be shut-down for energy saving purpose - in this embodiment, the access nodes to be shut down can be determined, e.g. through user and traffic distributions. For instance, during the night hours a large number of access nodes can be shut down. The access nodes to be shut-down may be determined in such a way that the impact on key performance indicators (KPIs), e.g. QoS (Quality of Service), and QoE (Quality of Experience), should be minimized while the energy-savings are maximized. In this manner, given the expected higher energy efficiency of low-power RNs, this may be achieved by possibly shutting down the high-power DeNBs and serving the active UEs by the RNs.

According to a further embodiment of the invention, the method further comprises deciding to shutdown at least a part of the source access point if a load of the cellular network system is below a predefined threshold.

Shutting down the source access point may denote that only a part of the access point is shut down, wherein another part is still active. For instance, the communication link to the RN may be shut down, wherein communication links to other RNs or UEs may be still active. This decision may be based on a predefined threshold. This threshold may be based, for instance, on a traffic load to the RN or any further characteristic of the communication link. If the traffic load is below the predefined threshold, the communication link to the RN may be shut down and the RN may be handed over to another access point.

According to a further embodiment of the invention, the method comprises, before changing the configuration of the RN, determining future connections of the RN to the user equipment and/or further user equipments.

By determining the future connections before changing the configuration, it may be ensured that these connections may be transferred/handed over to other RNs or access points beforehand to maintain these connections. By determining the future connections of the RN, i.e., connections which may need to be provided in the future, it may be determined whether the remaining connections can be handled by the reconfigured RN. This may be done by considering the new antenna configuration of the RN, i.e. anticipating the change of antenna configurations.

According to a further embodiment of the invention, the method further comprises handing over, in response to the change of the configuration, the RN from the source access point to the target access point.

If the configuration of the RN is changed before the handover, the quality of the connection to the new/target access point on the one hand and quality of the connection to UEs on the other hand may be improved.

According to a further embodiment of the invention, the method further comprises handing over the user equipment to the target access point in response to the trigger signal.

In this case, the UE may be handed over to the target access point before the antenna configuration of the RN is changed. This may ensure that a connection for the UE may be maintained also during the change of the antenna configuration of the RN.

According to a further embodiment of the invention, the method further comprises determining whether the configuration of the relay node is changed and handing over the user equipment in response to the change of the configuration of the relay node.

This embodiment may provide the advantage that it may be ensured that the RN has already changed its antenna configuration. Further, the change of antenna configurations may be anticipated when handing over UEs.

According to a further embodiment of the invention, the method further comprises handing over a further user equipment being connected to the source access point to the relay node and assigning the first beam to a communication between the further user equipment and the relay node.

In particular, a UE being in the range of the previous backhaul beam may be handed over to the RN. Thus, this UE may have an improved link quality as it is in the range of the beam.

UEs may also be handed over from the target access point or any other access point or RN to the RN to be handed over.

According to a second aspect of the invention, a relay node within a cellular network system is provided, wherein the cellular network system comprises a source access point and a target access point, wherein the RN is connected to the source access point. The RN comprises a first beam being assigned to a communication between the RN and the source access point and a second beam being assigned to a communication between the RN and a user equipment. The RN is to be handed over from the source access point to the target access point. The RN further comprises a receiving unit being adapted to receive a trigger signal being indicative for a planned handover of the relay node from the source access point to the target access point, and a configuration unit being adapted to change, in response to the trigger signal, the configuration of the RN by assigning the first beam to a communication between the user equipment and the RN and by assigning the second beam to a communication between the RN and the target access point.

A relay node according to this embodiment may be a base station not having a fixed connection to the operator's core network (backhaul). The backhaul connection may be provided to it over radio interface from a standalone (i.e. having a fixed backhaul) base station (donor node, DeNB). The RN can be either a stationary device (e.g. installed on a lamppost), or a mobile device (e.g. installed in a bus, train). The basic use case for RNs is providing low cost network coverage extension and coverage improvement in areas not suitable for typical base station deployments (e.g. due to cost and/or difficulties of providing fixed backhaul).

The relay node may comprise a receiving unit, for example a receiver as known by a skilled person. The relay node may also comprise a transmitting unit, for example a transmitter. The receiver and the transmitter may be implemented as one single unit, for example as a transceiver. The transceiver or the receiving unit and the transmitting unit may be adapted to communicate with a further relay node, a base station or the user equipment via at least one antenna. The relay node comprises a first beam being assigned to a communication between the relay node and the source access point and a second beam being assigned to a communication between the relay node and a user equipment. The beams may be provided by one or more antennas, which may form the beams using beam forming or any other kind of beam modulation or the beams may be created by two different sets of antennas. RNs may have two transceiver units, one for communication with the UE and the other with the donor eNB, in this case these transceiver units may also be swapped during handover as a consequence of swapping the beams. The RN may also have a single transceiver unit, for communication with the access point and the UE in a time multiplex manner.

The configuration unit may be implemented as a single unit or may be implemented for example as part of a standard control unit, like a CPU or a microcontroller.

The source and the target access points may be any kind of access point or point of attachment, which is capable of providing a wireless access to a cellular network system. Thereby, the wireless access may be provided for a user equipment and the relay node or for any other network element, which is capable of communicating in a wireless manner. The access point may be an eNodeB, eNB, home NodeB, HNB, relay node or any other kind of access point.

The access points may comprise a receiving unit, for example a receiver as known by a skilled person. The access points may also comprise a transmitting unit, for example a transmitter. The receiver and the transmitter of each access point may be implemented as one single unit, for example as a transceiver. The transceiver or the receiving unit and the transmitting unit may be adapted to communicate with the relay node via an antenna.

A user equipment (UE) in the context of this description may be any type of communication end device, which is capable of connecting with the described relay node. The UE may be in particular a cellular mobile phone, a Personal Digital Assistant (PDA), a notebook computer, a printer and/or any other movable communication device.

The user equipment may comprise a receiving unit or receiver which is adapted for receiving signals from the relay node or any access point.

The user equipment may further comprise a transmitting unit for transmitting a signal. The transmitting unit may be a transmitter as known by a skilled person. The receiver and the transmitting unit may be implemented as one single unit, for example as a transceiver. The transceiver or the receiver and the transmitting unit may be adapted to communicate with the relay node via an antenna.

According to a further embodiment of the relay node, the first beam is a directional beam and/or wherein the second beam is an omni-directional beam.

In particular, the directional beam may be provided by a directional antenna and the omni-direction beam may be provided by an omni-directional antenna. The term "antenna" may also refer to a set of antennas, e.g., cross polarized antennas when usage of MIMO is considered. Then all the antennas in a set may have or may form a similar coverage area.

According to a third aspect of the invention, a cellular network system for changing the configuration of a relay node within a cellular network system is provided, wherein the cellular network system comprises a source access point, a target access point, and at least one relay node as described above.

Generally herein, the method and embodiments of the method according to the first aspect may include performing one or more functions described with regard to the second or third aspect or an embodiment thereof. Vice versa, the relay node or network system and embodiments thereof according to the second and third aspect may include units or devices for performing one or more functions described with regard to the first aspect or an embodiment thereof.

According to a fourth aspect of the herein disclosed subject-matter, a computer program for changing the configuration of a relay node, is provided, the computer program being adapted for, when executed by a data processor assembly, controlling the method as set forth in the first aspect or an embodiment thereof.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a network system, a relay node and a method of changing the configuration of a relay node. It has to be pointed out that of course any combination of features relating to different aspects of the herein disclosed subject matter is also possible. In particular, some embodiments have been described with reference to apparatus type embodiments whereas other embodiments have been described with reference to method type embodiments. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTIONS OF THE DRAWINGS

Figure 1 shows a network system according to an exemplary embodiment of the invention.
Figure 2 shows a network system according to a further exemplary embodiment of the invention.
Figure 3 shows a network system according to a further exemplary embodiment of the invention before handover of the relay node.
Figure 4 shows a network system according to a further exemplary embodiment of the invention after handover of the relay node.
Figure 5 shows a network system according to a further exemplary embodiment of the invention.
Figure 6 shows a source access point shut down and relay node handover according to an exemplary embodiment of the invention.
Figure 7 shows a source access point shut down and relay node handover according to a further exemplary embodiment of the invention.
Figure 8 shows a source access point shut down and relay node handover according to a further exemplary embodiment of the invention.
Figure 9 shows an access point, a relay node and a user equipment within a network system according to an exemplary embodiment of the invention.

It is noted that in different figures, similar or identical elements are provided with the same reference signs.

### Detailed Description

In the following, embodiments of the herein disclosed subject matter are illustrated with reference to the drawings and with reference to aspects of current standards, such as LTE. However, such reference to current standards is only exemplary and should not be considered as limiting the scope of the claims.

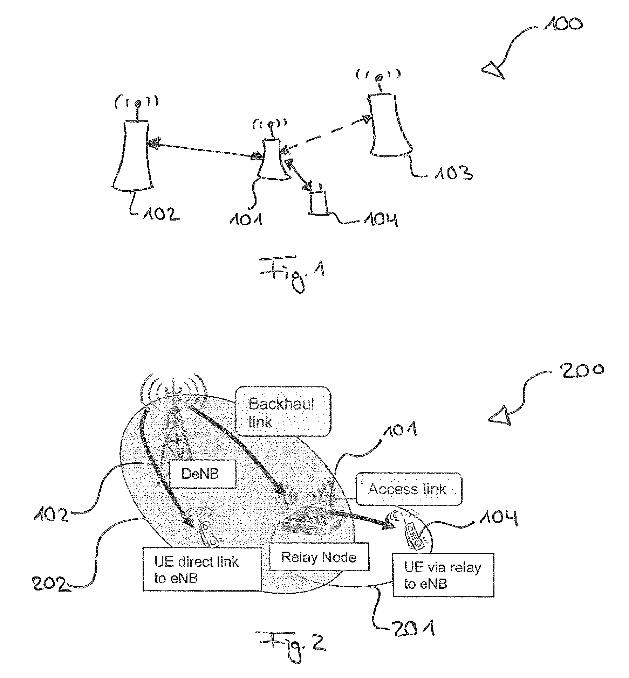

Figure 1 shows a network system 100 according to an exemplary embodiment of the invention. The cellular network system 100 comprises a relay node 101. The cellular network system comprises further a source access point 102, for instance a base station, and a target access point 103, which may also be a base station. The relay node is connected to the source access point, for example to extend the coverage area of the source access point. The relay node comprises a first beam being assigned to a communication between the relay node and the source access point and a second beam being assigned to a communication between the relay node and a user equipment 104. The relay node is scheduled to be handed over to the target access point. This may be the case, when the source access point might be shut down. Based on a trigger signal, which may be received by the relay node, the relay node may change its antenna configuration. This may mean that the first beam may be assigned to a communication between the user equipment and the relay node and the second beam may be assigned to a communication between the relay node and the target access point. This change of the antenna configuration may also be referred to as "swapping" of the antennas.

The trigger signal, which is indicative for the scheduled handover of the relay node from the source access point to the target access point, may be sent by the source base station/access point or a central control unit, like an operation and maintenance system.

In the following, the structure of such cellular network systems and the described method will be explained in more detail.

The technical field of the described method and relay node is mobile radio communications with focus on LTE-A. Relaying is a promising technology to extend cell coverage, in particular to provision high data rates in high shadowing environments (e.g. indoor coverage), and to enhance cell capacity with a low cost for LTE-A systems. Figure 2 shows the typical LTE radio access scenario including relay nodes (RNs). There are basically three different links in such a deployment: A direct link between a donor evolved Node B (DeNB) 102 (in this description also called source access point) and a user equipment, a wireless backhaul link or relay link between the DeNB 102 and a relay node (RN) 101, and an access link between the RN and a UE 104.

There are many types of relays which might be applicable to different scenarios. Type 1 relay node is specified by the work item in LTE Rel.10. Type 1 relay is an in-band relay, which uses the same frequency band for relay link and access link, and which controls its own cell, and a unique physical-layer cell identity is provided for each of the cells. The same RRM mechanisms and protocol stacks are available and from a UE perspective there is no difference between the cells controlled by a relay and the cells controlled by a "normal" eNB. Additionally, the cells controlled by the relay should also support LTE Release 8 UEs, thus a mandatory backward compatibility is required. Moreover, for Type 1 relay, access link and relay link transmissions are time multiplexed, which means the relay cannot communicate with RN-UEs and eNB simultaneously. There is a defined time frame consisting of several transmission time intervals (TTIs) (referred in the following as resource partitioning window) where one subset of the TTIs is used for relay links and the complementary part for the access links. All of the available resources can be used for the direct links, i.e. they share the resources with the relay links (the user scheduler at the eNB decides to schedule relay or direct links on any particular physical resource block (PRB), i.e. frequency resources of the OFDM system) and use the same resources as the access links using for instance interference coordination (ICIC) means. However, the described method and system or relay node is not limited to these type 1 relay nodes but can also be applied to other variants of relay nodes.

RNs are currently an integral part of 4G access networks as such deployments promise to fulfill the increasing demand on coverage and capacity in a cost-efficient way. Accordingly, a multiple of RNs can be deployed in the network to enhance the system performance. For the coverage extension, the RNs can be deployed regularly at the cell edge as shown in Figure 2, wherein the coverage 202 of the source base station is extended by the coverage 201 of the RN 101. As the capacity of the wireless backhaul link is a vital factor for the end-to-end performance of RN-UEs, it is a common practice that directional antennas pointing towards the DeNBs are assumed for the backhaul link, which can significantly enhance the performance. In addition, omni-directional antennas at RNs are assumed on the access link because the terminals can be anywhere around the RN.

On the other hand, wireless access networks have been growing at an astonishingly rapid pace with which the energy consumption and the consequent monetary and environmental costs have captured high attention among network operators, vendors and researchers alike. A promising approach to reduce the power consumption of the network is to shut down under-utilized access nodes. Such an approach can yield significant energy savings most significantly in low-traffic conditions but also in busy hours with a marginal impact on the quality of service (QoS).

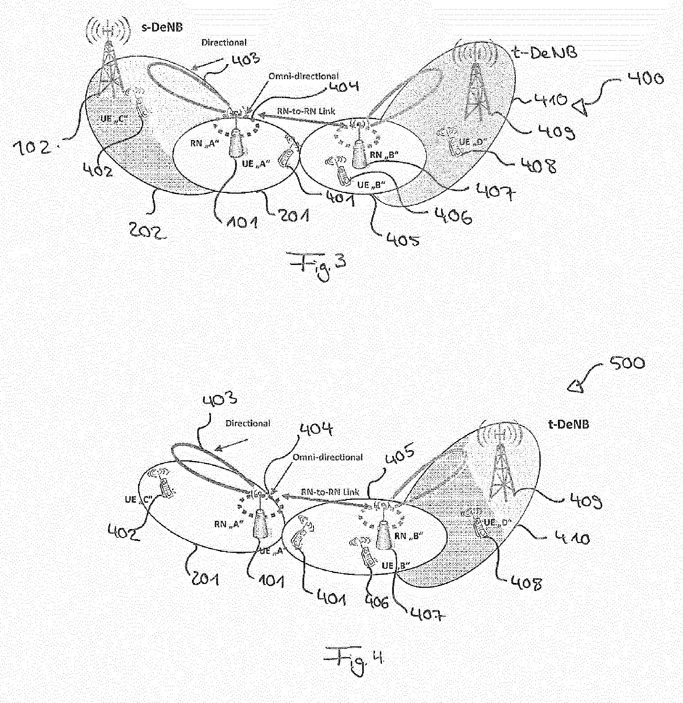

Figure 3 shows a network system 400 where RNs 101, 407 are deployed at the cell (202, 410) edge to enhance the cell coverage. Besides, directional antennas 403 are installed at the RNs conventionally for the backhaul transmissions. The directional antennas result in significantly reduced interference levels at the DeNB in UL (uplink) and at the RN in DL (downlink). In addition, omni-directional antennas 404 are installed at the RNs conventionally for the access link transmissions. In this example, the antenna pattern of the directional antennas at the RN is the same as that of the DeNB except that the backwards attenuation may be 20 dB while it may be 25 dB for the counterpart at the DeNB. Moreover, the maximum antenna gain of the directional antenna may be 7 dBi while the maximum antenna gain of the omni-directional antenna may be 5 dBi. Besides, the Tx (transmit) power levels of DeNBs and RNs may be 46 dBm and 30 dBm, respectively. Optionally the Tx level of RNs can be increased to 37 dBm in suburban scenarios. It has been recently shown that the area power consumption (kW/km²) of relay deployments is significantly lesser than the conventional eNB-only deployments, thanks to the substantially less power consumption of RNs.

In the considered example scenario, some of the access nodes, DeNBs and/or RNs, are to be shut-down for energy saving purpose. As mentioned above, there exist many studies which present significant energy savings via such an approach. The access nodes/points to be shut down can be determined, e.g. through user and traffic distributions. For instance, during the night hours a large number of access nodes can be shut down. The access nodes to be shut-down are determined in such a way that the impact on key performance indicators (KPIs), e.g. QoS, and QoE (Quality of Experience), should be minimized while the energy-savings are maximized. In this manner, given the expected higher energy efficiency of low-power RNs, this target can be achieved by possibly shutting down the high-power DeNBs and serving the active UEs by the RNs. In the example scenario, the serving-DeNB (s-DeNB) (also called in this context source access point) 102 in Figure 3 is to be shut-down. In this scenario, the RN "A" 101 and the macro UE denoted by UE "C" 402, that were previously served by the s-DeNB, should be handed-over to other access nodes in the Network. Preferably, the UE "C" can be handed over to the RNs in the respective sector of this s-DeNB. For instance, UE "C" is to be handed-over to RN "A" 101 and the RN "A" is to be handed-over to target-DeNB (t-DeNB) (also called in this context target access point) 409. The issues which arise in this case are exemplified as:
- After handover to the t-DeNB the backhaul antenna at the RN may perform poorly:
   During the network planning phase directional antennas 403 are installed at RN "A" 101, which are pointing towards the s-DeNB 102. Thus, other t-DeNB(s), like 409, would easily be in the backward attenuation side of this RN "A". As the backhaul link quality is decisive for the end-to-end throughput levels of RN-served UEs, this issue should be mitigated.
- The UEs to be taken over by the RN are served badly by the RN access antenna:
   The radio distance between RN "A" 101 and UE "C" 402 could be large which results in reduced received SNR. New techniques are required to cope with a possible decrease in signal-to-interference-plus-noise ratio (SINR).
- The hand-over procedures are to be re-visited, e.g. hand-over decisions to be biased, for handing-over the UE "C" 402 to RN "A" 101 and as well for handing-over the RN "A" 101 to the t-DeNB 409 before the s-DeNB 102 is shut-down. The decisions should include different KPIs such that the impact on the UEs in the network is minimized.

The idea of the invention is to swap backhaul antenna (typically directional) and access antenna (typically omni-directional) of an RN, e.g. during low load / power saving times in the network when the donor eNB of the RN is switched off in order to allow the RN to connect to another donor eNB than normally and to better serve UEs that are normally served by its original DeNB (which is however off).

It should be noted that, although DeNB shut-down is given as a motivation to swap backhaul and access link antennas, a swapping of backhaul and access link antennas and the associated procedures can be made use of even if a DeNB shut-down is not done but for some other reasons the association of an RN shall be changed, e.g. for load balancing or for moving relays. In the following a general term which is "s-DeNB shut down" is used for simplicity. Obviously, a fraction of the served cells (sectors) of this s-DeNB can be shut-down, e.g. only a single sector of a tri-sector DeNB can be shut down and the other two sectors can be kept ON.

Several techniques will be presented to mitigate the issues discussed above when the s-DeNB is shut down and the UEs need to be handed over to other access nodes, as well as the RNs previously connected to the s-DeNB need to be handed over to t-DeNBs. First, in this section the notion of swapping backhaul and access link antennas may be introduced, which may be used to mitigate the issues regarding the link qualities of the network nodes, such as access link and backhaul link SINRs' degradation due to the s-DeNB shut down. Furthermore, some enhancements/modifications that can be considered along with such a swapping will be described. In addition, associated hand-over procedures will be described, where a "hand-shaking" procedure among DeNBs and RNs is initiated such that the s-DeNB can be shut-down. This procedure may be referred to as the DeNB shut-down procedure. It should be noted that some of these techniques can be applied collectively or independently.

In this context, swapping of access-backhaul link antennas (which is also called change of the configuration of the relay node) is presented and employed as a means to improve the access and/or backhaul link qualities when the s-DeNB is shut down.

As discussed before, both directional antennas and omni-directional antennas are conventionally installed at the RNs for the backhaul transmissions and access link transmissions, respectively. In the example scenario, see Figure 4, such a configuration results in a significant performance degradation on the RN "A" to t-DeNB link because the directional backhaul antennas now point to the wrong direction. In order to mitigate this issue, omni-directional antennas, which are normally used for the access link, can be used for the backhaul link and the directional antennas can be used for the access link, see Figure 4. Moreover, the UE "C" can benefit from the increased antenna gain due to the directional antenna. Passive antennas are assumed that cannot be steered. The additional benefits of this new configuration for DL and UL are as follows.

In DL, the interference imposed by such RNs on other cells decreases. This could enable a scenario where, e.g. UE "A" 401 previously served by RN "A" 191 could be served by a neighbor RN "B" 407 (as shown in Figure 4). In order to keep the interference levels imposed by the RNs in the own sector low only the RN with the highest access link quality might be set to this configuration. Such a swapping might be applied if the t-DeNB 409 is in the backwards attenuation of the directional antenna of RN "A". Otherwise, the initial antenna configuration can be kept for some other RNs. In this case, such RNs will not impose an increased interference due to the switching.

In UL, the interference imposed on the RN "A" 101 can be drastically reduced by means of the directional antenna. Besides, contrary to the DL, in UL the UEs may have the same maximum transmit power level, which means that the coverage area of RNs in terms of UL received power may be larger. Thus, as long as the UEs are not driven to power limitation, no loss in terms of UL received SNR would be observed depending on the power control optimization strategy. Moreover, UE "A" can be still served by RN "B".

In the above described system, the antennas are assumed to be passive. Accordingly the swapping may be applied depending on the trade-off between the access link and backhaul link qualities. In particular, in a cell some of the RNs might swap their antennas and some others might not. A more advanced scheme, namely active antennas, can be as well employed at RNs. That is, after swapping applied beamforming techniques can be utilized to maximize the access link quality in terms of SINR by pointing towards the target UEs to be served, like UE "C" 402 in Figure 4. In particular, on top of adjusting the beam patterns of active antennas, still the antenna swapping can be combined also in the case of active antennas because the set of selected physical antennas also determines the resultant beam pattern. For example, the case may be considered where both the (original) access and the backhaul antennas consist of several antenna elements, i.e., are active antennas. Then the current backhaul antenna can be steered towards the current DeNB as efficiently as possible. If the set of directional antennas is used towards the s-DeNB 102 this will of course give a higher total antenna gain than if the set of omni-directional antennas is used towards s-DeNB, nonetheless in both cases usage of the active antennas for beamforming is beneficial. Similarly, antenna tilt can be optimized for both sets of antennas for either use in backhaul or access according to the instantaneous use.

The backhaul connection of RN "A" 101 can be attained by means of a multi-hop connection through a near-by RN or RNs, such as RN "B" 407. It should be noted that the line-of-sight (LOS) probability of the RN-to-RN link could be high which would allow a better backhaul link quality. Such a configuration depends on, e.g., the expected load of RN "A" 101, the loads of RN "B", 407 and the t-DeNB 409 and the regarding link qualities. This scheme could be combined with any of the above schemes, in particular swapping access and backhaul antennas.

In the following, exemplary hand-over procedures will be described. The DeNB shut-down procedure can be initiated either by the operation and maintenance (O&M) system depending on, e.g., the measurements obtained through the network elements, such as desired KPIs (load of the DeNBs, RNs, QoS requirements of active UEs, etc.) and the current total power consumption level of the network, or by the s-DeNB itself depending on, e.g., day hour, the own measurements such as load due to macro UEs and relay UEs, and pre-defined thresholds which can trigger the DeNB shut-down procedure. In the latter, time to trigger threshold may be particularly important and can depend on the day hour. Accordingly, the former can be thought as a centralized approach and the latter as a distributed approach. Besides, the operator could define and manage such thresholds depending on its requirements and targets.

In case of a centralized initiation, the O&M system may decide on the s-DeNBs to be shut-down. This decision can be made according to several metrics depending on the current network status. This procedure may be advantageous as the O&M system has an overview about the network and in off-peak hours some of the cells of the s-DeNBs can be shut-down. It should be noted that even in busy hours some cells might be unoccupied and thus an s-DeNB shut down decision can be taken given that the target requirements are met. Thus, on the average, higher energy savings can be achieved. After the decision is taken by the O&M system, the s-DeNBs to be shut down may be informed.

In case of a distributed initiation, the s-DeNB may decide itself to enter the shut-down procedure. Such a decision can be taken depending on pre-defined metrics such as the load threshold, the time interval being under-loaded and also depending on the load of the served RNs, day hour etc.

The above mentioned techniques along with the swapping of access-backhaul antennas can be part of the hand-over procedures depending on, e.g., the antenna capabilities of the RNs. The technique to be utilized may depend on the signaled network status through the measurements of the quality of the access and backhaul links when the RN(s) connect(s) to the t-DeNB(s) and serve(s) the UEs previously served by the s-DeNB.

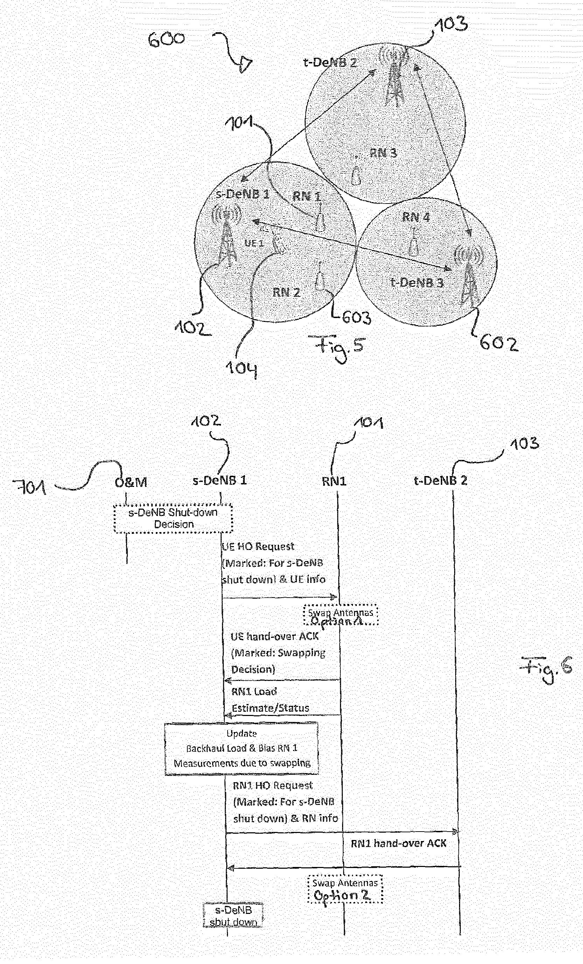

In the following, exemplary handover and swapping procedures will be described in the context of Figures 6, 7 and 8 After the decision on s-DeNB shut down, either by centralized or distributed initiation, the s-DeNBs will start the hand-over procedure for the served UEs and RNs as shown in Figures 6, 7 and 8. A network structure according to Figure 5 may be assumed. The network 600 comprises an RN 101 being connected to a source access point (s-DeNB 1) 102. A UE1 104 is connected to the RN 103. There exist two further cells in the network 600, comprising each a possible target DeNB, 103 and 602, respectively.

It should be noted that the O&M system 701 possibly gathers information from DeNBs concerning the different cell loads including the RNs, time duration being under-loaded, etc. Therefore, in case of the centralized initiation the O&M system may as well propose a t-DeNB and an RN (or a list of t-DeNBs and RNs) which could possibly take over, respectively, the RNs and the UEs previously connected to the s-DeNBs. Alternatively, the O&M lets the s-DeNBs decide on t-DeNBs and RNs.

The swapping decision can be taken either by s-DeNB or by RN. Figure 6 shows an exemplary procedure, wherein the swapping decision is taken by RN 1 101. The s-DeNB 1 102 sends a UE handover (HO) Request message for the UE 1 104 to RN 1, this request can be marked with a single bit which means that the request is part of the s-DeNB shut down procedure. To determine the RN to which such a request is sent, the s-DeNB 1 can make use of the available measurements like the load of its cells (including its RN cells) and the load of neighboring cells (including neighboring DeNB cells and RN cells of neighboring DeNBs), the UE locations and reference signal received power/reference signal received quality (RSRP/RSRQ). Alternatively, the RNs are proposed by the O&M. It should be noted that different RNs can admit different numbers of UEs or some of the RNs, which are under-loaded, can be as well shut down. Along with the UE HO Request, s-DeNB 1 sends the UE context info which includes, e.g. UE locations. Then, RN 1 can estimate its load on the access link taking into account the UEs that would be handed over soon from the s-DeNB 1 to the RN 1 and the number of relay-UEs to be served by RN 1. Note that the number of relay-UEs should take into account the relay-UEs which would be handed over to other access nodes. These relay-UEs are the ones which would be in the backward attenuation region of the swapped directional antenna. The RN 1 could now decide on swapping. As depicted in Figure 6, the swapping could be done at this instant (marked as option 1 in the figures) to provide a seamless service for the admitted macro-UEs or RN 1 could wait for an HO Acknowledgement from the t-DeNB 2 103 so that a seamless service could be attained on the backhaul link (marked as option 2 in the figures). Afterwards the RN 1 sends an HO Request Acknowledgment which also could be a subset of the UEs that could be admitted.

Besides, along with this acknowledgement the swapping decision could also be sent. Alternatively, the change of the antenna configurations may be anticipated via the measurements of the source node-served UEs. For example, RSRP measurements of one or a multiple of source-node served UEs may be used. By means of the locations of these UEs along with a decrease or increase in RSRP levels regarding the RN 1, the new antenna configurations can be anticipated. In particular, a UE in the main beam direction might experience 7 dBi (directional antenna) - 5 dBi (omni-directional antenna) = 2 dB increase in RSRP while other UEs which are not in the main beam direction might observe an increase or decrease in RSRP depending on their respective angles with the main beam direction. The path-losses of such UEs could be taken into account, e.g. via normalization, so that the antenna configuration could be anticipated more precisely. Accordingly, if the swapping is anticipated, the HO decisions can be biased as well.

The next step is sending a HO Request message for the RN 1 to the t-DeNB 2; this request can be marked with a single bit which means that the request is a part of the s-DeNB shut down procedure. Moreover, the RN 1 context info can include the anticipated load of the regarding backhaul link taking the swapping decision into account. After getting the HO Request Acknowledgment from the t-DeNB 2, s-DeNB 1 can enter the shutting down phase which also comprises the execution of the handover. As mentioned above, swapping of the antennas may also be performed at an instant after the HO Acknowledgement and before the shut down (see option 2 in the figures).

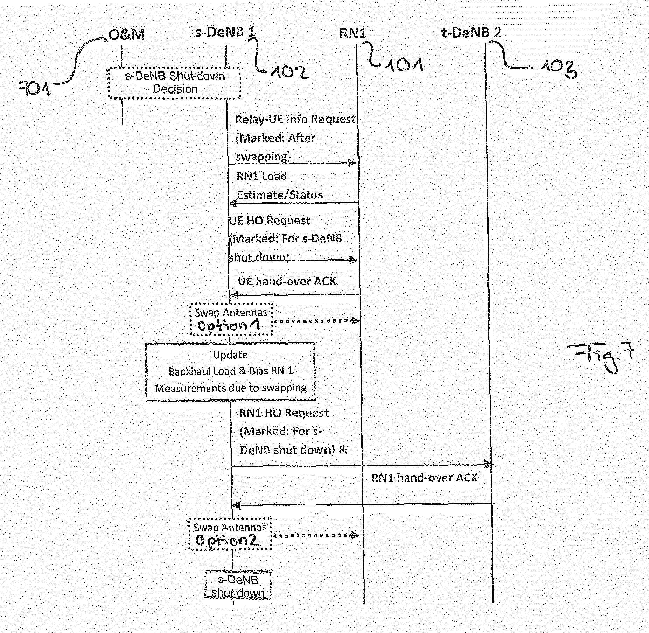

Figure 7 shows an exemplary procedure, wherein the swapping decision is taken by s-DeNB 1 102. In this case the RN 1 101 should as well send the RSRP/RSRQ measurement of the t-DeNB(s) to the s-DeNB 1. Using the measurements and possibly the locations of the UEs to be handed-over (in particular their RSRP/RSRQ measurements) and those of the RN 1, s-DeNB 1 can decide on the necessity of such a swapping. The rest of the procedure is similar to the one explained above in the context of Figure 6.

If the swapping of the backhaul-access link antenna is to be done, the aforementioned measurements obtained from the UEs may have to be biased accordingly. In this case the bias may depend on the UE locations and such a bias might be more effective especially for the stationary UEs. Similarly, the measurements of the RNs may also be biased.

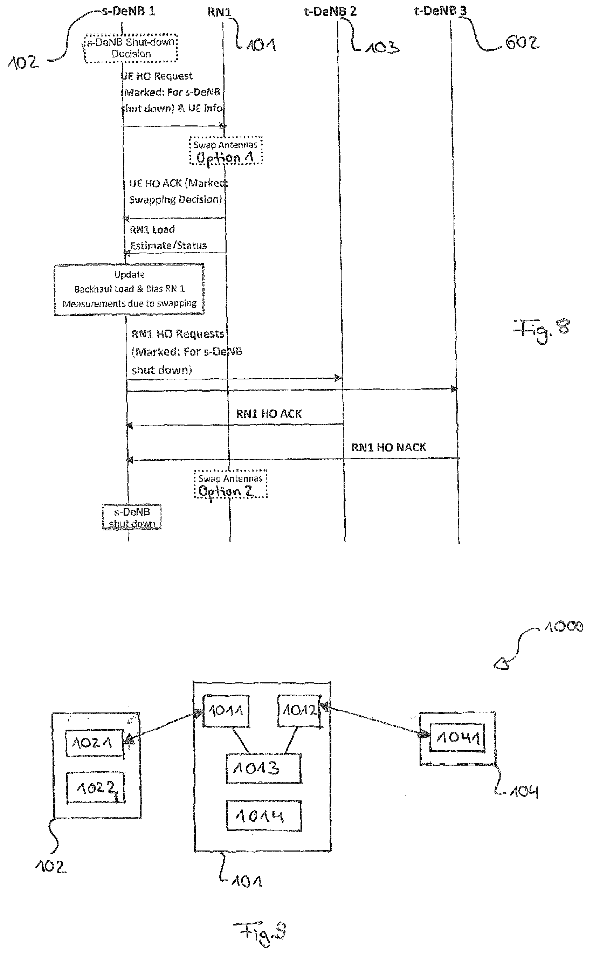

After the decision on s-DeNB 1 102 shut down is taken, the s-DeNB 1 may select the target RNs/eNBs for its UEs and the t-DeNBs for its RNs based on the load of its cells (including its RN cells) and the load of neighboring cells (including neighboring DeNB cells and RN cells of neighboring DeNBs). Then multiple HO Requests can be sent as shown in Figure 8 (here requests are sent to t-DeNB 2 103 and t-DeNB 3 602), and s-DeNB may select the t-DeNB after receiving the HO Request Acknowledgements. The HO Request towards the non-selected DeNBs can be then cancelled. The multiple HO Requests can be sent also for the UEs as well. The rest of the procedure is similar to the one explained in Figures 6 and 7. In this example case, it is assumed that t-DeNB 2 admits the RN 1.

A multi-hop backhaul link can be formed with several combinations, e.g. RN1-RN3-tDeNB2, RN1-RN2-tDeNB3, and RN2-RN1-RN3-tDeNB2, see Figure 5. In this case, the link qualities between different relay links may be required and can be wisely obtained via UE measurements.

In both initiation approaches above, RN 2 603 can also serve a fraction of the UEs from s-DeNB, while the others are served by RN 1 101. This may allow that all the UEs in the switched off cell are served by the relays even though a single RN would have too little power to serve them all, furthermore the set of backhaul beams can more effectively cover the cell than a single backhaul beam. Moreover, RN 2 could be handed-over to t-DeNB 3 602 given the smaller radio distance.

In order to determine the network conditions after swapping of access-backhaul antennas, the knowledge on UE locations can be effectively used. If such knowledge is not available some predictions can be made by means of available measurements, taking known beam patterns (and possibly transmission powers or other antenna parameters like downtilt) of the different beams into account, allowing predicting the received signal after swapping based on the measurements done before. Alternatively, the access link and backhaul antennas could be swapped for some short time before of the handover of the RN in order to perform the necessary measurements at the cost of possible performance degradation due to switching the antennas away from their ordinary use. However, as for inband relaying, only one set of antennas might need to be active at any time, the additional measurements could be done during the inactive phase thus limiting any performance degradations. Furthermore the measurements can be done during the active time of the other antenna set, even though such measurements may be meaningless during that configuration (e.g. a UE does not need to have knowledge regarding backhaul) but may be indicative for the situation after swapping antennas nonetheless (e.g. when the former backhaul antennas afterwards serve UEs). All these features can be used to predict handovers of UEs towards and away from the RN already before swapping the antennas in order to allow executing them in a timely manner immediately after the swapping of even before, rather than waiting for ordinary measurements after the swapping and only then starting handover procedures.

To decide the target RNs/eNBs for its UEs and the t-DeNBs for its RNs, the s-DeNB may need to know their loads. This is already possible starting from LTE release 9 (TS36.300 V9.8.0 section 22.4.1) because neighboring eNBs exchange Resource Status Update messages that contain information related to the load in their cells; these are the messages specified for load balancing. They are not explicitly shown in the figures in order not to complicate them.

Since in case of s-DeNB shut down probably more than one UE and more than one RN need to be handed over as well as they might have the same target RN/eNB and t-DeNB, respectively, a single HO Request message and the corresponding HO Request Acknowledgement can include the information for more than one UE or more than one RN.

Figure 9 shows a network system 1000 according to a further exemplary embodiment of the invention. The cellular network system 1000 comprises a relay node 101, a source access point 102 and a target access point (not shown), wherein the relay node is connected to the source access point. The relay node comprises a first beam 1011 being assigned to a communication between the relay node and the source access point and a second beam 1012 being assigned to a communication between the relay node and a user equipment 104. The first beam 1011 and the second beam 1012 can be provided by one or two antennas, wherein the first beam is considered as being directional and the second beam is considered as being omni-directional. The relay node is to be handed over from the source access point to the target access point, for instance due to a shut down of the source access point. The relay node further comprises a receiving unit 1013 being adapted to receive a trigger signal being indicative for a planned handover of the relay node from the source access point to the target access point. The receiving unit may be coupled to the first beam and the second beam and may be adapted to control the beams/antennas.

The receiving unit may be for example a receiver as known by a skilled person. The relay node may also comprise a transmitting unit, for example a transmitter. The receiver and the transmitter may be implemented as one single unit, for example as a transceiver. The transceiver or the receiving unit and the transmitting unit may be adapted to communicate with a further relay node, a base station or the user equipment via at least one antenna. The relay node comprises further a configuration unit 1014 being adapted to change, in response to the trigger signal, the configuration of the relay node by assigning the first beam to a communication between the user equipment and the relay node and by assigning the second beam to a communication between the relay node and the target access point. The configuration unit may be implemented as a single unit or may be implemented for example as part of a standard control unit, like a CPU or a microcontroller.

The source and the target access points may be any kind of access point or point of attachment, which is capable of providing a wireless access to a cellular network system. Thereby, the wireless access may be provided for a user equipment and the relay node or for any other network element, which is capable of communicating in a wireless manner. The access point may be an eNodeB, eNB, home NodeB, HNB, relay node or any other kind of access point.

The access points may comprise a receiving unit (1021 for the source access point), for example a receiver as known by a skilled person. The access points may also comprise a transmitting unit, for example a transmitter. The receiver and the transmitter of each access point may be implemented as one single unit, for example as a transceiver. The transceiver or the receiving unit and the transmitting unit may be adapted to communicate with the relay node via an antenna. The source access point may further comprise a control unit 1022 being responsible for example for the shut down. The control unit may be implemented as a single unit or may be implemented for example as part of a standard control unit, like a CPU or a microcontroller.

A user equipment (UE) in the context of this description may be any type of communication end device, which is capable of connecting with the described relay node. The UE may be in particular a cellular mobile phone, a Personal Digital Assistant (PDA), a notebook computer, a printer and/or any other movable communication device.

The user equipment may comprise a receiving unit or receiver which is adapted for receiving signals from the relay node or any access point.

The user equipment may further comprise a transmitting unit for transmitting a signal. The transmitting unit may be a transmitter as known by a skilled person. The receiver and the transmitting unit may be implemented as one single unit, for example as a transceiver 1041. The transceiver or the receiver and the transmitting unit may be adapted to communicate with the relay node via an antenna.

Having regard to the subject matter disclosed herein, it should be mentioned that, although some embodiments refer to a "base station", "eNB", "access point", "relay node", etc., it should be understood that each of these references is considered to implicitly disclose a respective reference to the general term "network component" or, in still other embodiments, to the term "network access node". Also other terms which relate to specific standards or specific communication techniques are considered to implicitly disclose the respective general term with the desired functionality.

It should further be noted that a relay node as disclosed herein is not limited to dedicated entities as described in some embodiments. Rather, the herein disclosed subject matter may be implemented in various ways in various locations in the communication network while still providing the desired functionality.

According to embodiments of the invention, any suitable entity (e.g. components, units and devices) disclosed herein, e.g. the calculation unit, are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularities on device level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein.

It should be noted that the term "comprising" does not exclude other elements or steps. It may also be possible in further refinements of the invention to combine features from different embodiments described herein above. It should also be noted that reference signs in the claims should not be construed as limiting the scope of the claims.

### List of reference signs:

- 100: Network system
- 101: Relay node
- 102: Source access point
- 103: Target access point
- 104: User equipment

- 200: Network system
- 201: Coverage/cell of relay node
- 202: Coverage/cell of source access point
- 203: User equipment

- 400: Network system
- 401: User equipment
- 402: User equipment
- 403: Backhaul antenna
- 404: Access antenna
- 405: Coverage/cell of relay node
- 406: User equipment
- 407: Relay node
- 408: User equipment
- 409: Target access point
- 410: Coverage/cell of target access point

- 500: Network system

- 600: Network system
- 602: Further target access point

- 701: Operation & Maintenance system

- 1000: Network system
- 1011: First beam/antenna
- 1012: Second beam/antenna
- 1013: Receiving unit
- 1014: Configuration unit
- 1021: Transceiver
- 1022: Control unit
- 1041: Transceiver

## Claims

1. A method for changing the configuration of a relay node (101) within a cellular network system (100), wherein the cellular network system comprises a source access point (102) and a target access point (103), wherein the relay node is connected to the source access point and comprises a first beam (1011) being assigned to a communication between the relay node and the source access point and a second beam (1012) being assigned to a communication between the relay node and a user equipment (104), wherein the relay node is to be handed over from the source access point to the target access point
the method comprising
changing, in response to a scheduled handover of the relay node from the source access point to the target access point, the configuration of the relay node by assigning the first beam to a communication between the user equipment and the relay node and/or by assigning the second beam to a communication between the relay node and the target access point and in response of a handover of a further user equipment being connected to the source access point (102) to the relay node (101) assigning the first beam (1011) to a communication between the further user equipment and the relay node (101).

2. The method as set forth in claim 1, the method further comprising receiving, by the relay node, a trigger signal being indicative for the scheduled handover of the relay node from the source access point to the target access point, and
changing, in response to the trigger signal, the configuration of the relay node.

3. The method as set forth in any one of the preceding claims, wherein receiving a trigger signal comprises receiving the trigger signal from the source access point (102) or an operation and maintenance system (701).

4. The method as set forth in any one of the preceding claims, wherein the trigger signal is indicative for a shutdown of at least a part of the source access point (102).

5. The method as set forth in claim 4, the method further comprising deciding to shutdown at least a part of the source access point (102) if a load of the cellular network system (100) is below a predefined threshold.

6. The method as set forth in any one of the preceding claims, the method comprises, before changing the configuration of the relay node (101), determining future connections of the relay node to the user equipment (104) and/or further user equipments.

7. The method as set forth in any one of the preceding claims, the method further comprises handing over, in response to the change of the configuration, the relay node (101) from the source access point (102) to the target access point (103).

8. The method as set forth in any one of the preceding claims, the method further comprising handing over the user equipment (104) to the target access point (103) in response to the trigger signal.

9. The method as set forth in claim 8, the method further comprising determining whether the configuration of the relay node (101) is changed and handing over the user equipment (104) in response to the change of the configuration of the relay node (101).

10. A relay node (101) within a cellular network system (100), wherein the cellular network system comprises a source access point (102) and a target access point (103), wherein the relay node is connected to the source access point,
the relay node comprising a first beam (1011) being assigned to a communication between the relay node and the source access point and a second beam (1012) being assigned to a communication between the relay node and a user equipment (104),
wherein the relay node is to be handed over from the source access point to the target access point,
the relay node further comprising
a configuration unit (1014) being adapted to change, in response to a scheduled handover of the relay node from the source access point to the target access point, the configuration of the relay node by assigning the first beam to a communication between the user equipment and the relay node and/or by assigning the second beam to a communication between the relay node and the target access point, **characterised in that** the configuration unit (1014) is further adapted, in response to a handover of a further user equipment being connected to the source access point (102) to the relay node (101), to assign the first beam (1011) to a communication between the further user equipment and the relay node (101).

11. The relay node (101) as set forth in claim 10, wherein the first beam (1011) is a directional beam and/or wherein the second beam (1012) is an omni-directional beam.

12. A cellular network system (100) for changing the configuration of a relay node (101) within the cellular network system, wherein the cellular network system comprises a source access point (102), a target access point (103), and at least one relay node (101) as set forth in claim 10.

## Patentansprüche

1. Verfahren zum Ändern der Konfiguration eines Relais-Knotens (101) innerhalb eines Mobilfunknetzsystems (100), wobei das Mobilfunknetzsystem einen Quellzugriffspunkt (102) und einen Zielzugriffspunkt (103) umfasst, wobei der Relais-Knoten mit dem Quellzugriffspunkt verbunden ist und einen ersten Strahl (1011), der einer Kommunikation zwischen dem Relais-Knoten und dem Quellzugriffspunkt zugewiesen ist, und einen zweiten Strahl (1012), der einer Kommunikation zwischen dem Relais-Knoten und einem Anwendergerät (104) zugewiesen ist, umfasst, wobei der Relais-Knoten von dem Quellzugriffspunkt an den Zielzugriffspunkt zu übergeben ist,
wobei das Verfahren Folgendes umfasst:
Ändern als Reaktion auf eine geplante Übergabe des Relais-Knotens von dem Quellzugriffspunkt an den Zielzugriffspunkt der Konfiguration des Relais-Knotens durch Zuweisen des ersten Strahls an eine Kommunikation zwischen dem Anwendergerät und dem Relais-Knoten und/oder durch Zuweisen des zweiten Strahls an eine Kommunikation zwischen dem Relais-Knoten und dem Zielzugriffspunkt und als Reaktion auf eine Übergabe eines weiteren Anwendergeräts, das mit dem Quellzugriffspunkt (102) verbunden ist, an den Relais-Knoten (101) Zuweisen des ersten Strahls (1011) an eine Kommunikation zwischen dem weiteren Anwendergerät und dem Relais-Knoten (101).

2. Verfahren nach Anspruch 1, wobei das Verfahren ferner umfasst, durch den Relais-Knoten ein Auslösesignal zu empfangen, das die geplante Übergabe des Relais-Knotens von dem Quellzugriffspunkt an den Zielzugriffspunkt angibt, und
als Reaktion auf das Auslösesignal die Konfiguration des Relais-Knotens zu ändern.

3. Verfahren nach einem der vorhergehenden Ansprüche, wobei das Empfangen eines Auslösesignals umfasst, das Auslösesignal von dem Quellzugriffspunkt (102) oder einem Betriebs- und Wartungssystem (701) zu empfangen.

4. Verfahren nach einem der vorhergehenden Ansprüche, wobei das Auslösesignal eine Stilllegung mindestens eines Teils des Quellzugriffspunkts (102) angibt.

5. Verfahren nach Anspruch 4, wobei das Verfahren ferner umfasst, zu entscheiden, zumindest einen Teil des Quellzugriffspunkts (102) stillzulegen, wenn eine Last des Mobilfunknetzsystems (100) unter einem vorgegebenen Schwellenwert liegt.

6. Verfahren nach einem der vorhergehenden Ansprüche, wobei das Verfahren umfasst, vor dem Ändern der Konfiguration des Relais-Knotens (101), zukünftige Verbindungen des Relais-Knotens mit dem Anwendergerät (104) und/oder weiteren Anwendergeräten zu bestimmen.

7. Verfahren nach einem der vorhergehenden Ansprüche, wobei das Verfahren ferner umfasst, als Reaktion auf die Änderung der Konfiguration den Relais-Knoten (101) von dem Quellzugriffspunkt (102) an den Zielzugriffspunkt (103) zu übergeben.

8. Verfahren nach einem der vorhergehenden Ansprüche, wobei das Verfahren ferner umfasst, das Anwendergerät (104) als Reaktion auf das Auslösesignal an den Zielzugriffspunkt (103) zu übergeben.

9. Verfahren nach Anspruch 8, wobei das Verfahren ferner umfasst, zu bestimmen, ob die Konfiguration des Relais-Knotens (101) geändert wurde, und das Anwendergerät (104) als Reaktion auf die Änderung der Konfiguration des Relais-Knotens (101) zu übergeben.

10. Relais-Knoten (101) innerhalb eines Mobilfunknetzsystems (100), wobei das Mobilfunknetzsystem einen Quellzugriffspunkt (102) und einen Zielzugriffspunkt (103) umfasst, wobei der Relais-Knoten mit dem Quellzugriffspunkt verbunden ist,
wobei der Relais-Knoten einen ersten Strahl (1011), der einer Kommunikation zwischen dem Relais-Knoten und dem Quellzugriffspunkt zugewiesen ist, und einen zweiten Strahl (1012), der einer Kommunikation zwischen dem Relais-Knoten und einem Anwendergerät (104) zugewiesen ist, umfasst,
wobei der Relais-Knoten von dem Quellzugriffspunkt an den Zielzugriffspunkt zu übergeben ist,
wobei der Relais-Knoten ferner Folgendes umfasst:
eine Konfigurationseinheit (1014), die ausgelegt ist, als Reaktion auf eine geplante Übergabe des Relais-Knotens von dem Quellzugriffspunkt an den Zielzugriffspunkt die Konfiguration des Relais-Knotens durch Zuweisen des ersten Strahls an eine Kommunikation zwischen dem Anwendergerät und dem Relais-Knoten und/oder durch Zuweisen des zweiten Strahls an eine Kommunikation zwischen dem Relais-Knoten und dem Zielzugriffspunkt zu ändern, **dadurch gekennzeichnet, dass** die Konfigurationseinheit (1014) ferner ausgelegt ist, als Reaktion auf eine Übergabe eines weiteren Anwendergeräts, das mit dem Quellzugriffspunkt (102) verbunden ist, an den Relais-Knoten (101) den ersten Strahl (1011) einer Kommunikation zwischen dem weiteren Anwendergerät und dem Relais-Knoten (101) zuzuweisen.

11. Relais-Knoten (101) nach Anspruch 10, wobei der erste Strahl (1011) ein gerichteter Strahl ist und/oder wobei der zweite Strahl (1012) ein Strahl mit kugelförmiger Richtcharakteristik ist.

12. Mobilfunknetzsystem (100) zum Ändern der Konfiguration eines Relais-Knotens (101) innerhalb des Mobilfunknetzsystems, wobei das Mobilfunknetzsystem einen Quellzugriffspunkt (102), einen Zielzugriffspunkt (103) und mindestens einen Relais-Knoten (101) nach Anspruch 10 umfasst.

## Revendications

1. Un procédé de modification de la configuration d'un noeud relais (101) à l'intérieur d'un système de réseau cellulaire (100), dans lequel le système de réseau cellulaire comprend un point d'accès source (102) et un point d'accès cible (103), le noeud relais étant raccordé au point d'accès source et comprenant un premier faisceau (1011) qui est attribué à une communication entre le noeud relais et le point d'accès source et un deuxième faisceau (1012) qui est attribué à une communication entre le noeud relais et un équipement d'utilisateur (104), le noeud relais étant destiné à être transféré du point d'accès source au point d'accès cible,
le procédé comprenant
la modification, en réponse à un transfert planifié du noeud relais du point d'accès source au point d'accès cible, de la configuration du noeud relais par l'attribution du premier faisceau à une communication entre l'équipement d'utilisateur et le noeud relais et/ou par l'attribution du deuxième faisceau à une communication entre le noeud relais et le point d'accès cible et, en réponse à un transfert d'un autre équipement d'utilisateur qui est raccordé au point d'accès source (102) au noeud relais (101), l'attribution du premier faisceau (1011) à une communication entre l'autre équipement d'utilisateur et le noeud relais (101).

2. Le procédé selon la revendication 1, le procédé comprenant en outre la réception, par le noeud relais, d'un signal déclencheur qui est indicatif du transfert planifié du noeud relais du point d'accès source au point d'accès cible, et
la modification, en réponse au signal déclencheur, de la configuration du noeud relais.

3. Le procédé selon l'une quelconque des revendications précédentes, dans lequel la réception d'un signal déclencheur comprend la réception du signal déclencheur à partir du point d'accès source (102) ou d'un système d'exploitation et de maintenance (701).

4. Le procédé selon l'une quelconque des revendications précédentes, dans lequel le signal déclencheur est indicatif d'une désactivation d'au moins une partie du point d'accès source (102).

5. Le procédé selon la revendication 4, le procédé comprenant en outre la décision de désactiver au moins une partie du point d'accès source (102) si une charge du système de réseau cellulaire (100) se situe sous un seuil prédéfini.

6. Le procédé selon l'une quelconque des revendications précédentes, le procédé comprenant, avant la modification de la configuration du noeud relais (101), la détermination de raccordements futurs du noeud relais à l'équipement d'utilisateur (104) et/ou à d'autres équipements d'utilisateur.

7. Le procédé selon l'une quelconque des revendications précédentes, le procédé comprenant en outre le transfert, en réponse à la modification de la configuration, du noeud relais (101) du point d'accès source (102) au point d'accès cible (103).

8. Le procédé selon l'une quelconque des revendications précédentes, le procédé comprenant en outre le transfert de l'équipement d'utilisateur (104) au point d'accès cible (103) en réponse au signal déclencheur.

9. Le procédé selon la revendication 8, le procédé comprenant en outre la détermination si la configuration du noeud relais (101) est modifiée et le transfert de l'équipement d'utilisateur (104) en réponse à la modification de la configuration du noeud relais (101).

10. Un noeud relais (101) à l'intérieur d'un système de réseau cellulaire (100), dans lequel le système de réseau cellulaire comprend un point d'accès source (102) et un point d'accès cible (103), dans lequel le noeud relais est raccordé au point d'accès source,
le noeud relais comprenant un premier faisceau (1011) qui est attribué à une communication entre le noeud relais et le point d'accès source et un deuxième faisceau (1012) qui est attribué à une communication entre le noeud relais et un équipement d'utilisateur (104),
dans lequel le noeud relais est destiné à être transféré du point d'accès source au point d'accès cible,
le noeud relais comprenant en outre
une unité de configuration (1014) qui est adaptée de façon à modifier, en réponse à un transfert planifié du noeud relais du point d'accès source au point d'accès cible, la configuration du noeud relais par l'attribution du premier faisceau à une communication entre l'équipement d'utilisateur et le noeud relais et/ou par l'attribution du deuxième faisceau à une communication entre le noeud relais et le point d'accès cible, **caractérisé en ce que** l'unité de configuration (1014) est adaptée en outre, en réponse à un transfert d'un autre équipement d'utilisateur qui est raccordé au point d'accès source (102) au noeud relais (101), de façon à attribuer le premier faisceau (1011) à une communication entre l'autre équipement d'utilisateur et le noeud relais (101).

11. Le noeud relais (101) selon la revendication 10, dans lequel le premier faisceau (1011) est un faisceau directionnel et/ou dans lequel le deuxième faisceau (1012) est un faisceau omnidirectionnel.

12. Un système de réseau cellulaire (100) destiné à la modification de la configuration d'un noeud relais (101) à l'intérieur du système de réseau cellulaire, le système de réseau cellulaire comprenant un point d'accès source (102), un point d'accès cible (103) et au moins un noeud relais (101) selon la revendication 10.
